# EUROPEAN PATENT SPECIFICATION

(11) **EP 1 886 841 B1**
(45) Date of publication and mention of the grant of the patent: **17.11.2010**
(21) Application number: 06016636.0
(22) Date of filing: 09.08.2006
(51) Int. Cl.: B60B 33/04, B62B 5/00

(54) **Wheel device for a frame**
Radvorrichtung für einen Rahmen
Dispositif de roue pour un châssis

(43) Date of publication of application: 13.02.2008
(73) Proprietor: Kwang Yang Motor Co., Ltd., Kaohsiung (TW)
(72) Inventor: Chen, Jui-Tien, Kaohsiung City (TW); Chen, Chun-Ching, Feng-Shan City, Kaohsiung Hsien (TW)
(74) Representative: Bockhorni & Kollegen

(56) References cited:
- US-A- 1 423 700
- US-A- 3 085 285
- US-A- 4 576 391
- US-A- 5 769 431
- US-A- 6 095 533
- US-A1- 2004 046 345
- US-A1- 2005 161 916
- US-B1- 6 796 001

## Description

The invention relates to a wheel device, more particularly to a wheel device for a frame.

It is known in the art to provide a power generator with four wheels at a bottom part thereof to facilitate moving the power generator from one location to another. However, since the wheels in the prior art are unable to prevent rolling when the power generator is placed on uneven ground, the power generator can hardly be disposed stably on the ground. Moreover, since the wheels are designed primarily to facilitate moving of the power generator between locations, the power generator can easily move on the ground when bumped. Undesired movement of the power generator can result in sparks due to sudden disconnection from electrical appliances, which arises in safety concerns . Furthermore, the wheels are disposed outside the outer periphery of the bottom part of the power generator such that the area occupied by the power generator with the wheels is undesirably increased.

Therefore, the object of the present invention is to provide a wheel device that can overcome at least one of the aforesaid drawbacks associated with the prior art.

A wheel device known from US 1,423,700 contains all the features of the preamble of claim 1.

According to the present invention, there is provided a wheel device for a frame. The wheel device includes a wheel unit and a coupling unit for coupling the wheel unit to the frame. The coupling unit includes an upright tubular sleeve adapted to be mounted fixedly on the frame, a support axle that extends movably through the tubular sleeve and that has a bottom end connected to the wheel unit, and a fastening member extending radially through the tubular sleeve and abutting releasably against the support axle for positioning the support axle in the tubular sleeve.

Other features and advantages of the present invention will become apparent in the following detailed description of the preferred embodiment with reference to the accompanying drawings, of which:
Figure 1 is an exploded perspective view of the preferred embodiment of a wheel device according to the present invention;
Figure 2 is a schematic partly sectional view to illustrate a fastened state of a support axle of the preferred embodiment;
Figure 3 is an assembled perspective view of the preferred embodiment;
Figure 4 is a view similar to Figure 2, but illustrating an unfastened state of the support axle; and
Figure 5 is a view similar to Figure 3, but illustrating the support axle when displaced upwardly compared to Figure 3.

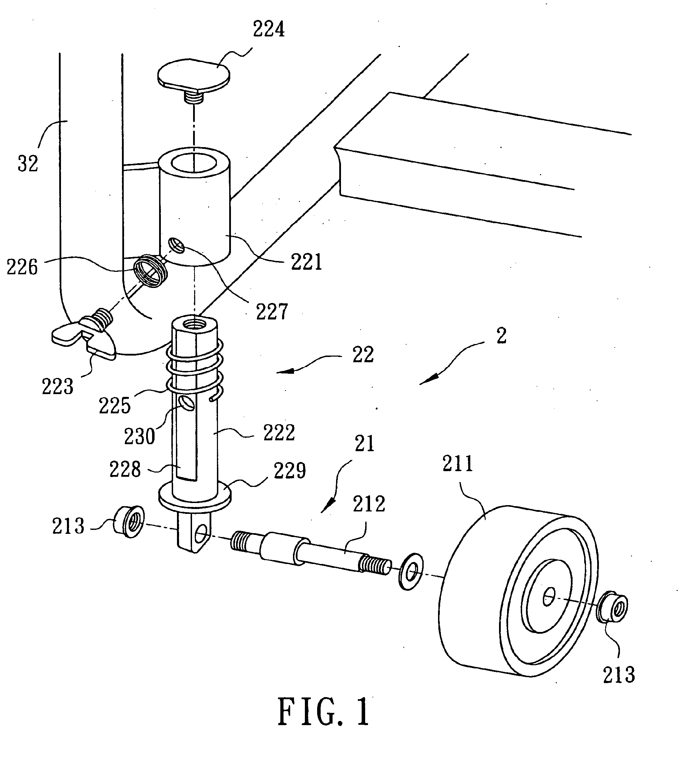

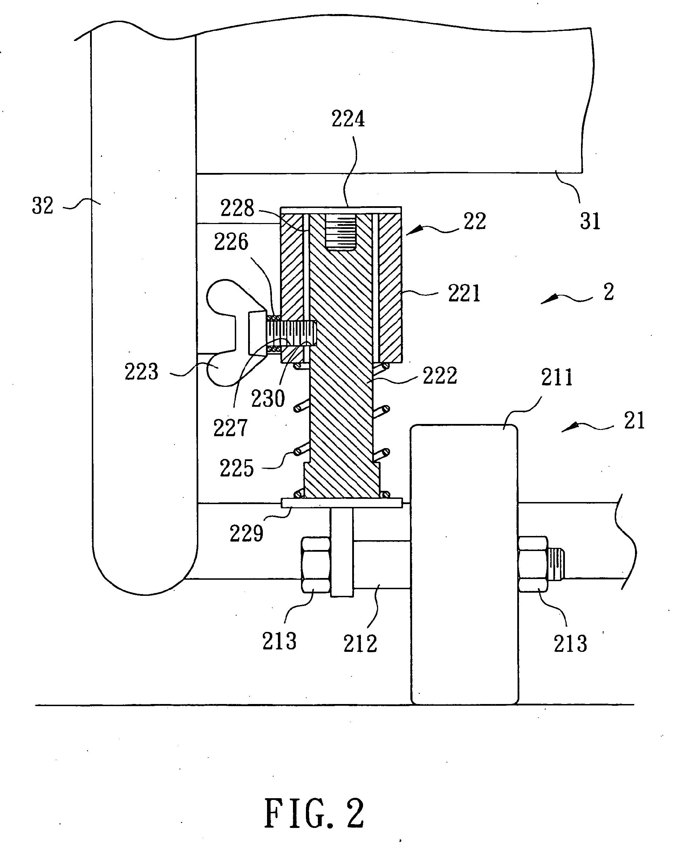

Referring to Figures 1 and 2, the preferred embodiment of a wheel device 2 according to the present invention is applied to a frame 32 that carries a power generator 31. The wheel device 2 is mounted on a bottom part of the frame 32, and includes four wheel units 21 and four coupling units 22 for coupling the wheel units 21 to the frame 32, respectively. In the Figures, only a corner of the power generator 31 and the frame 32, and one of the wheel units 21 and a corresponding one of the coupling units 22 are shown for convenience of illustration. In practice, each of the four corners of the frame 32 is associated with a respective set of the wheel unit 21 and the coupling unit 22.

Each of the coupling units 22 includes an upright tubular sleeve 221 adapted to be mounted fixedly on the frame 32, a support axle 222 that extends movably through the tubular sleeve 221 and that has a bottom end connected to the respective wheel unit 21, and a fastening member 223 that extends radially through the tubular sleeve 221 and that abuts releasably against the support axle 222 for positioning the support axle 222 in the tubular sleeve 221. The support axle 222 is formed with a radial flange 229 proximate to the bottom end and disposed below the tubular sleeve 221. The coupling unit 22 further includes a cap 224 connected to a top end of the support axle 222 and disposed above the tubular sleeve 221. The cap 224 and the radial flange 229 cooperate to limit range of movement of the support axle 222 relative to the tubular sleeve 221. The coupling unit 22 further includes a first biasing member 225 that is sleeved on the support axle 222 and that has opposite ends abutting against the radial flange 229 and a bottom end face of the tubular sleeve 221, respectively. The first biasing member 225 is in the form of a spring in this embodiment. Moreover, in this embodiment, the tubular sleeve 221 is formed with a radial screw hole 227, and the fastening member 223 is in the form of a threaded fastener that extends through and that engages threadedly the radial screw hole 227. The coupling unit 22 further includes a second biasing member 226 that is sleeved on the fastening member 223 and that has opposite ends abutting against a head part of the fastening member 223 and an outer side of the tubular sleeve 221, respectively. In this embodiment, the second biasing member 226 is in the form of a spring.

Preferably, the support axle 222 has a flat side 228 registered with the radial screw hole 227 and formed with a positioning groove 230. The fastening member 223 is extendible removably into the positioning groove 230.

Each of the wheel units 21 includes a wheel axle 212 connected to the bottom end of the support axle 222, and a wheel body 211 mounted rotatably on the wheel axle 212. The wheel axle 212 has opposite threaded ends that extend through the support axle 222 and the wheel body 211, respectively. The wheel unit 21 further includes a pair of nuts 213 on the opposite threaded ends of the wheel axle 212. The nuts 213 serve to secure the wheel axle 212 to the bottom end of the support axle 222, and to secure rotatably the wheel body 211 on the wheel axle 212.

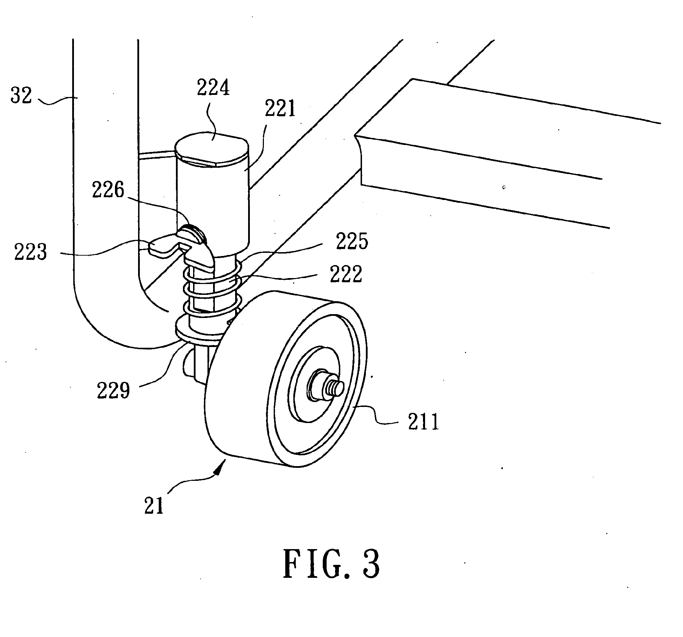

Referring to Figures 2 and 3, when moving the power generator 31 on the frame 32 to a desired location, for each coupling unit 22, the fastening member 223 is loosened so that the support axle 222 is able to move upward and downward in the tubular sleeve 221. Thus, when the associated corner of the frame 32 is lifted from the ground, the support axle 222 moves downwardly in the tubular sleeve 221 by virtue of gravity and the biasing force of the first biasing member 225 until the cap 224 abuts against a top end face of the tubular sleeve 221. The fastening member 223 is then tightened to extend into the positioning groove 230 and abut against the support axle 222 so as to position the support axle 222 in the tubular sleeve 221. At this time, the wheel body 221 of the respective wheel unit 21 protrudes from the bottom side of the frame 32 and can roll on the ground. Since the frame 32 is spaced apart from the ground, the power generator 31 on the frame 32 can be easily moved to a desired location.

Moreover, for each coupling unit 22, wear between the fastening member 223 and the tubular sleeve 221, as well as undesired loosening of the fastening member 223, can be avoided due to the presence of the second biasing member 226.

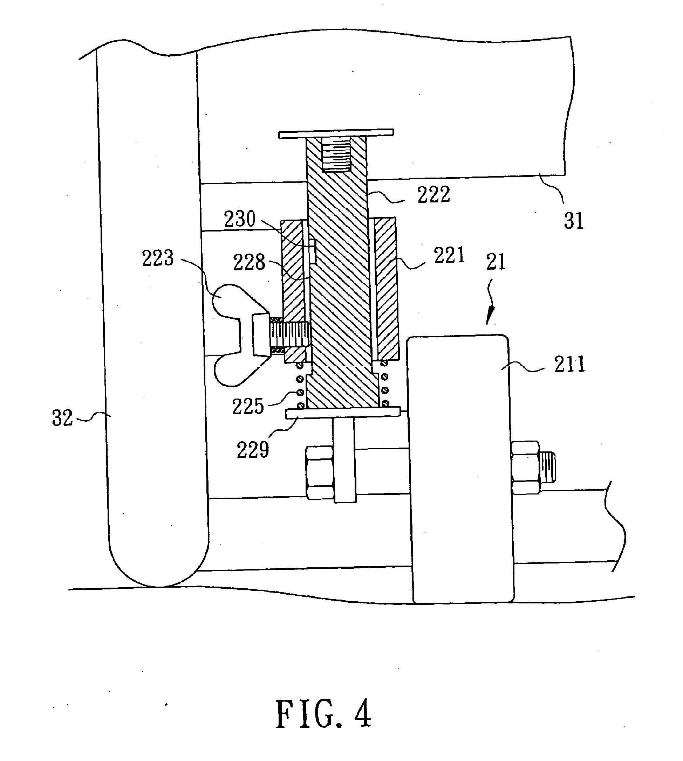

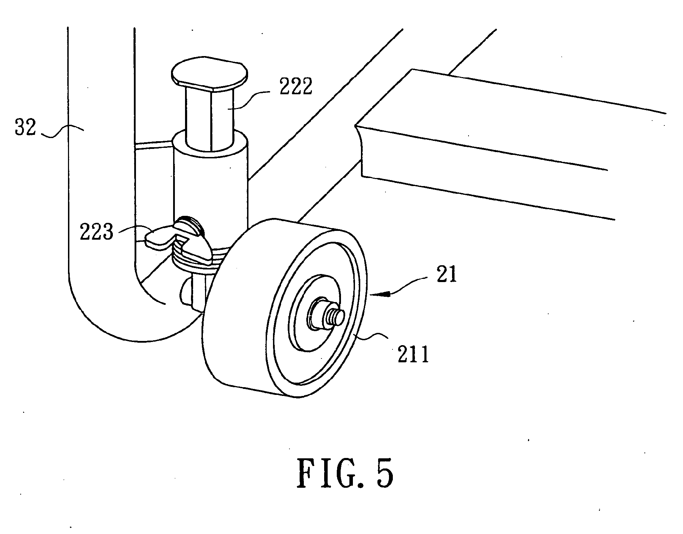

Referring to Figures 4 and 5, when parking the power generator 31 on the frame 32 at a desired location, for each coupling unit 22, the fastening member 223 is loosened so as to be disengaged from the positioning groove 230 in the support axle 222 such that the tubular sleeve 221 is able to move downward with the frame 32 until the frame 32 contacts the ground. At this time, the first biasing member 225 is compressed between the tubular sleeve 221 and the radial flange 229, and accumulates a restoring force. Even if the power generator 31 is parked on uneven ground as shown in Figure 4, the first biasing member 225 biases the support axle 222 such that appropriate contact between the wheel body 211 of the corresponding wheel unit 21 and the ground can be ensured. The fastening member 223 is then tightened to abut tightly against the flat side 228 of the support axle 222.

Therefore, when the power generator 31 is parked, the coupling units 22 are independently adjusted so that the wheel bodies 211 of the wheel units 21 can retract into the frame 32 and enable the frame 32 to contact the ground directly, thereby ensuring stability. Due to the first biasing members 225, the wheel bodies 211 can still contact the ground to provide additional support points for the power generator 31 and avoid unintentional movement of the power generator 31.

In addition, since the wheel device 2 is mounted on and can be received in the frame 32, the area occupied by the frame 32 is not increased when the wheel device 2 of this invention is in use.

## Claims

1. A wheel device (2) for a frame (32), the wheel device (2) including a wheel unit (21) and a coupling unit (22) for coupling the wheel unit (21) to the frame (32), the wheel unit (21) including a wheel axle (212) and a wheel body (211) mounted rotatably on the wheel axle (212), the coupling unit (22) including: an upright tubular sleeve (221) adapted to be mounted fixedly on the frame (32); a support axle (222) extending movably through the tubular sleeve (221), and having a bottom end connected to the wheel axle (212); and a fastening member (223) extending radially through the tubular sleeve(221), and abutting releasably against the support axle (222) for positioning the support axle (222) in the tubular sleeve (221); **characterized in that**: the tubular sleeve (221) is formed with a radial screw hole (227) to engage threadedly the fastening member (223); the support axle (222) having a flat side (228) formed with a positioning groove (230), the fastening member (223) being extendible removably into the positioning groove (230); the coupling unit (22) further including a cap (224) connected to a top end of the support axle (222) and disposed above the tubular sleeve (221), the support axle (222) being formed with a radial flange (229) proximate to the bottom end and disposed below the tubular sleeve (221), the cap (224) and the radial flange (229) cooperating to limit range of movement of the support axle (222) relative to the tubular sleeve (221); the positioning groove (230) being registered with the radial screw hole (227) to facilitate extension of the fastening member (223) into the positioning groove (230) when the cap (224) abuts against a top end face of the tubular sleeve (221); the coupling unit (22) further including a first biasing member (225) that is sleeved on the support axle (222) and that has opposite ends abutting against the radial flange (229) and the tubular sleeve (221).

2. The wheel device (2) as claimed in Claim 1, **characterized in that** the coupling unit (22) further includes a second biasing member (226) that is sleeved on the fastening member (223) and that has opposite ends abutting against the fastening member (223) and the tubular sleeve (221).

## Patentansprüche

1. Radvorrichtung (2) für einen Rahmen (32), wobei die Radvorrichtung (2) eine Radeinheit (21) und eine Kupplungseinheit (22) zum Kuppeln der Radeinheit (21) an den Rahmen (32) umfasst, wobei die Radeinheit (21) eine Radachse (212) und einen Radkörper (211), der rotierbar an der Radachse (212) montiert ist, umfasst, wobei die Kupplungseinheit (22) eine aufrechte rohrförmige Hülse (221), die so angeordnet ist, um fest an dem Rahmen (32) montiert zu werden; eine Stützachse (222), die sich bewegbar durch die rohrförmige Hülse (221) erstreckt und ein unteres Ende aufweist, das mit der Radachse (212) verbunden ist; und ein Befestigungselement (223) umfasst, das sich radial durch die rohrförmige Hülse (221) erstreckt und lösbar an die Stützachse (222) angrenzt, um die Stützachse (222) in der rohrförmigen Hülse (221) zu positionieren, **dadurch gekennzeichnet, dass** die rohrförmige Hülse (221) mit einem radialen Schraubloch (227) zum Verschrauben des Befestigungselementes (223) gebildet ist; die Stützachse (222) eine flache Seite (228) aufweist, die mit einer Positionierungsnut (230) ausgebildet ist, wobei das Befestigungselement (223) in die Positionierungsnut (230) lösbar erstreckbar ist; die Kupplungseinheit (22) des Weiteren einen Deckel (224) umfasst, der mit einem oberen Ende der Stützachse (222) verbunden ist und über der rohrförmigen Hülse (221) angeordnet ist, wobei die Stützachse (222) mit einem radialen Flansch (229) nahe dem unteren Ende ausgebildet ist und unter der rohrförmigen Hülse (221) angeordnet ist, wobei der Deckel (224) und der radiale Flansch (229) kooperieren, um den Bewegungsbereich der Stützachse (222) relativ zu der rohrförmigen Hülse (221) zu beschränken; die Positionierungsnut (230) mit dem radialen Schraubloch (227) paßgenau ist, um Erstrecken des Befestigungselementes (223) in die Positionierungsnut (230) zu erleichtern, wenn der Deckel (224) gegen eine obere Endfläche der rohrförmigen Hülse (221) stößt; die Kupplungseinheit (22) des Weiteren ein erstes Vorspannelement (225) umfasst, welches hülsenartig an der Stützachse (222) vorgesehen ist und welches gegenüberliegende Enden aufweist, die gegen den radialen Flansch (229) und die rohrförmige Hülse (221) stoßen.

2. Radvorrichtung (2) nach Anspruch 1, **dadurch gekennzeichnet, dass** die Kupplungseinheit (22) des Weiteren ein zweites Vorspannelement (226) umfasst, welches hülsenartig an dem Befestigungselement (223) vorgesehen ist und welches gegenüberliegende Enden aufweist, die gegen das Befestigungselement (223) und die rohrförmige Hülse (221) stoßen.

## Revendications

1. Dispositif de roue (2) destiné à un châssis (32), le dispositif de roue (2) comportant une unité de roue (21) et une unité de couplage (22) pour coupler l'unité de roue (21) au châssis (32), l'unité de roue (21) incluant un essieu de roue (212) et un corps de roue (211) monté à rotation sur l'essieu de la roue (212), l'unité de couplage (22) comprenant : un manchon vertical tubulaire (221) adapté pour être monté de façon fixe sur le châssis (32) ; un support d'essieu (222) s'étendant de façon mobile à travers le manchon tubulaire (221) et comportant une extrémité inférieure connectée à l'essieu de roue (212) ; et un élément de fixation (223) s'étendant radialement à travers le manchon tubulaire (221), et venant en butée de façon libérable contre l'essieu support (222) pour positionner le support d'essieu dans le manchon tubulaire (221) ; **caractérisé en ce que** : le manchon tubulaire (221) est formé avec un trou de vissage radial (227) afin de s'engager par filetage avec l'élément de fixation (223) ; le support d'essieu (222) présentant un côté plat (228) formé avec une gorge de positionnement (230), l'élément de fixation (223) pouvant s'étendre de façon libérable dans la gorge de positionnement (230) ; l'unité de couplage (22) comportant, de plus, un capuchon (224) connecté à une extrémité supérieure du support d'essieu (222) et étant disposé au-dessus du manchon tubulaire (221), le support d'essieu (222) étant formé avec un rebord radial (229) à proximité de l'extrémité inférieure et disposé au-dessous du manchon tubulaire (221), le capuchon (224) et le rebord radial (229) coopérant pour limiter une zone de déplacement du support d'essieu (222) par rapport au manchon tubulaire (221) ; la gorge de positionnement (230) étant alignée avec le trou radial de vissage (227) afin de faciliter l'extension de l'élément de fixation (223) dans la gorge de positionnement (230) lorsque le capuchon (224) bute contre une face d'extrémité supérieure du manchon tubulaire (221) ; l'unité de couplage (22) comportant, de plus, un premier élément de rappel élastique (225) qui est placé en manchon sur le support d'essieu (222) et **en ce qu'**il présente des extrémités opposées venant en butée contre le rebord radial (229) et le manchon tubulaire (221).

2. Dispositif de roue (2) selon la revendication 1, **caractérisé en ce que** l'unité de couplage (22) comporte, de plus, un second élément de rappel élastique (226) qui est placé en manchon sur l'élément de fixation (223) et qui comporte des extrémités opposées butant contre l'élément de fixation (223) et le manchon tubulaire (221).
